# EUROPEAN PATENT APPLICATION

(11) **EP 4 480 697 A1**
(43) Date of publication of application: **25.12.2024**
(21) Application number: 23179992.5
(22) Date of filing: 19.06.2023
(51) Int. Cl.: B32B 17/10

(54) **LAMINATED GLASS COMPRISING PHOTOCHROMIC POLYMER FILMS**

(71) Applicant: Kuraray Europe GmbH, 65795 Hattersheim (DE)
(72) Inventor: Keller, Uwe, 77210 Avon (FR); Mummy, Florian, 60325 Frankfurt am Main (DE); BIER, Felix, 76879 Ottersheim (DE)
(74) Representative: Janßen, Christian Oliver

(57) **Abstract**

The invention is directed to laminated glass comprising two glass sheets laminated by means of at least one thermoplastic interlayer comprising at least one photochromic polymer film and a UV-shielding polymer film.

## Description

The invention is directed to laminated glass comprising two glass sheets laminated by means of at least one thermoplastic interlayer comprising at least one photochromic polymer film and a UV-shielding polymer film.

Laminated safety glass usually consists of two glass sheets laminated by means of a thermoplastic polymer film. Such films are generally made from plasticiser-containing polyvinyl acetals like polyvinyl butyral (PVB).

In passenger vehicles and smart buildings it is often desired to incorporate certain functionalities in the glazing. One example of such a functionality is the option to provide protection against glare and heat from the natural sunlight.

One option to provide such shading is the incorporation of photochromic materials in the interlayer film of laminated glass, as for example described in DE4024330A1.

Photochromic molecules are compounds that reversibly convert between two states having different colors in response to stimulation with electromagnetic radiation. Typically, irradiation with light within a specific wavelength band causes isomerization or conversion from a relatively transparent form to a colored form. Once the irradiation by light is stopped, conversion from the colored form to the transparent form takes place spontaneously through a thermal process or induced by irradiating at a wavelength different from that used for the conversion from the transparent state to the colored state.

Photochromic molecules are generally sensitive to prolonged sunlight exposure and tend to decompose, especially by light irradiation when present in their excited state. Since the photochromic molecules are dispersed in the bulk of the interlayer in DE4024330A1, they are more slowly destroyed by the exposure to the sun from the outside of the car/building as compared to other systems which have the photochromic molecules coated directly onto the surface of the glass or the interlayer. However, the photochromic molecules in DE4024330A1, albeit slower, still decompose over time leading to a discoloration of the interlayer and to a less prominent photochromic effect.

Therefore, there is still a need in the industry for improved glazing with the possibility of photochromic shading.

Now therefore, the current invention concerns a laminated glazing comprising an interlayer with a first film, which is oriented to the outside and which substantially blocks all natural UV radiation from the sunlight, as well as a second film incorporating the photochromic molecules, which is protected from the exposure to the natural UV radiation by the first film and which can be selectively excited by means of a radiation source from the inside. Using this set up, the photochromic molecules have a much prolonged lifetime since they will not be permanently exposed to the natural UV light from the sunlight but are only excited on demand.

Moreover, this setup provides the possibility to excite the photochromic material in certain areas only and thus, provide a more versatile way of shading or glare protection.

Accordingly, the invention concerns a laminated glass for use as a vehicle glazing or a building glazing comprising a first glass sheet and a second glass sheet laminated by means of at least one thermoplastic interlayer comprising
- at least one film A, oriented to the inside of the vehicle or the building, comprising a polymer and a photochromic substance which shows photocoloration when exposed to radiation at a wavelength of equal to or less than 400 nm,
- at least one film B, oriented to the outside of the vehicle or the building, comprising a polyvinyl acetal, at least one plasticiser and at least one UV absorber,

wherein film B has a light transmittance for light with a wavelength of equal to or less than 400 nm of 5% or less measured according to ISO 13837, and
wherein a radiation source with a wavelength of equal to or less than 400 nm suitable to excite the photochromic substance in the at least one film A is located in such way to allow the excitation of the photochromic material.

The term "which shows photocoloration when exposed to radiation at a wavelength of equal to or less than 400 nm" shall be intended to denote that film A comprises photochromic molecules which can be excited by being exposed to radiation at a wavelength of equal to or less than 400 nm, i.e. in the non-visible UV range, whereas they do not show or do not substantially show photocoloration at a wavelength above 400 nm, i.e. in the visible range.

The radiation source may be any light source which is able to emit light with a wavelength of equal to or less than 400 nm, i.e. UV light, such as LED emitted light of peak wavelengths between 280 and 405 nm, e.g. at 365 nm, 385 nm or 405 nm. Also suitable is Xenon lamp emitted light, fluorescent lamp emitted light and, when properly re-guided to the inside of the building or vehicle or the inner glass, natural sunlight.

In the easiest instance, the radiation source is located on the inside of the vehicle or the building. Alternatively, the radiation source can be located on the edge or partial recess of the glazing or even on the outside of the vehicle or the building. In that case, the radiation is guided in such way to allow the excitation of the photochromic material in the second film.

Film B has a light transmittance for light with a wavelength of equal to or less than 400 nm of 5% or less measured according to ISO 13837. Thus, film B blocks most of the natural UV radiation from the outside and protects the photochromic molecules in film A. Preferably, film B has a light transmittance for light with a wavelength of equal to or less than 400 nm of 4% or less, more preferably of 2.50 or less, most preferably of 1% or less and specifically of 0.50 or less.

Preferably, the polymer in film A is polyamide, polyethylene terephthalate (PET), polybutylene terephthalate (PBT), polyethylen furanoate (PEF), polyethylene naphthalate (PEN), polyvinyl alcohol (PVA), polylactic acid (PLA), cellulose acetate, polymethyl methacrylates (PMMA), ionomers, or a combination thereof. Most preferably, the polymer in film A comprises, consists of or essentially consists of polyvinyl alcohol.

Depending on the desired colour impression, various classes of photochromic compounds can be used as photochromic substances. Spirooxazines are one of the two most industrially important classes of organic photochromic colourant. In the late 1970s it was discovered that the spirooxazines are relatively high resistant to UV photodegradation, which resulted in the successful commercialisation as sunlight-responsive colourants in the ophthalmic lenses in the 1990s. In addition to their robustness, the spirooxazine class is easy accessible by standard organic synthesis. A special benefit is the easy color fine tunability by variation in structure of the spirooxazines.

The best known are the indolinospironaphthoxazines, as described for example in EP-A1-01 46 135 or DE-C2-38 14 631, as well as azamodified representatives of this class, as known for example from EP-B1 01 41 107, US-46 37 698 or EP-A1-02 45 020. All these compounds provide a violet or blue to blue-green colour effect. For a green colour impression, for example, indolinospirobenzothiopyrans as described in US-45 65 779 or a photochromic compound from the aforementioned teachings and a yellow coloured compound can be used. The latter are known, for example, from EP-A1-03 62 771 or EP-A2-02 46 114, both of which also describe spiropyran or spirooxazine compounds. Another important groups of spirooxazines are the nitrospiropyrans with fast back isomerization in the dark in less than 10 minutes.

The indolinospirobenzoxazines mentioned in WO-A1-88/02 371 and many of the fulgides and fulgimides from GB-21 70 202 give deep orange to violet-red colour effects. All the above-mentioned colours can also be achieved with representatives of the class of di- and tetrahydroindolizines described in DE-OS 29 06 193, DE-A1-32 20 257 and DE-A1-35 21 432. By suitably mixing different photochromic colours, neutral, grey or brown shades can also be produced.

Photochromic substances are widely commercially available, e.g. 1,3-dihydro-1,3,3-trimethylspiro[2H-indole-2,3' -[3H]naphth[2,1-b][1,4]oxazine] as Photorome^{®} I from Sigma-Aldrich or 8-Methoxy-6-nitro-1' -3' ,3' -trimethylspiro[2H-1-benzopyran-2,2' -indolin] as an example for a commercial spiropyran also from Sigma Aldrich And 6-Nitro-1,3,3-trimethylspiro[2H-1-benzopyran-2,2' -indolin] 2,2'-Bis(2-chlorophenyl)-4,4',5,5'-tetraphenyl-1,1'-biimidazole is an example for a commercial hexaarylbiimidazole type photochromic dye available from TCI.

4,4'-Bis(hexyloxy)-3-methylazobenzene is an example for a commercial azobenzene type photochromic dye also available from TCI.

Cis-1,2-Dicyano-1,2-bis(2,4,5-trimethyl-3-thienyl)ethene is an example for a diarylethene type photochromic dye available from TCI.

2,3-Dihydro-2-spiro-4'-[8'-aminonaphthalen-1'(4'H)-one]perimidine is a spiroperimidines type photochromic dye also available from TCI.

Other photoswitchable chemicals are azobene and its derivatives; diarylethene, with the simplest example stilbene, and its derivatives and the prominent examples of the dithienylethene types. Another compounds with photoswitchable performance are some quinones and phenoxynahthacene quinone in particular. Also some imidazole derivative show color change when exposed to UV light and switch back in the dark or in the absence of UV light. An example is the cyclophane version of hexaarylbiimidazole (HABI).

Also preferably, the photochromic substance is introduced into film A in form of a nanoemulsion.

The nanoemulsion comprises a polymer in which a large number of liquid nano-droplets are suspended. The term "nano-droplets" shall denote droplets having diameters between 5 and 1000 nm. To allow visible light to be transmitted without scattering, the nano-droplets preferably have diameters of 200 nm or less.

US10227527B2 describes the preparation of such nanoemulsions, in which a first solution of the photochromic material in a first solvent is prepared. A second solution of the polymer of film A in a second solvent is prepared. Both solutions are then mixed and emulsified by methods known in the art, e.g. by sonication or vortex mixing.

Preferably, the first solvent is an oil and the second solvent is water. Oils may be animal, plant-based, or mineral/petrochemical in origin, e.g. alkanes and other mineral oils, silicone oils, vegetable oils such as acid triglycerides, and liquid crystal materials.

The concentration of the photochromic material in the first solution is preferably from 0.1% to 8% by weight and more preferably from 1.2% to 5% by weight.

The second solution is preferably a polyvinyl alcohol (PVA) solution in water. The concentration preferably ranges from 3% to 40% by weight, more preferably from 10% to 30% by weight.

Preferably, film A has a thickness of 10 - 1000 µm, more preferably 20 - 500 µm, even more preferably 30 um - 200 um and most preferably 40 um - 150 um.

In case the film A does not adhere sufficiently to the glass sheet, a further film C with good adhesion both to the polymer of film A and the glass surface may be used between film A and the glass surface. A very suitable polymer material for film C is a polyvinyl acetal, most preferably polyvinyl butyral.

On the other hand, it is important that film C does not block the UV light from the radiation source used to excite the photochromic material.

Accordingly, the laminated glass preferably comprises a film C comprising a polyvinyl acetal and a plasticizer wherein film C is located between film A and one of the glass sheets and wherein film C has a light transmittance for light with a wavelength of equal to or less than 400 nm of 5% or more as measured according to ISO 13837.

More preferably, film C has a light transmittance for light with a wavelength of equal to or less than 400 nm of 7.5% or more, most preferably of 100 or more, 150 or more or 200 or more.

In an alternative preferred embodiment, film A comprises a polyvinyl acetal and a plasticizer. Thus, film A itself adheres well enough to the glass sheet and no additional film C is required. Most preferably, the polyvinyl acetal is polyvinyl butyral.

In case both films A and B comprise a polyvinyl acetal, a barrier film between film A and film B might be preferred to avoid the diffusion of the UV absorber in film B and/or the photochromic material in film A to the respective other layer.

Preferably, the barrier film comprises, consists of or essentially consists of modified or non-modified polyethylene terephthalate (PET), polybutylene terephthalate (PBT), or polyvinyl alcohol (PVA) . In the case of a non-modified PET, it is preferred to use biaxially stretched PET, and in the case of a modified PET it is preferred to use PETG (poly(cyclohexanedimethylene terephthalate-co-ethylene terephthalate). Also useful as diffusion barriers are layers of polyvinyl alcohol or ethylene-modified polyvinyl alcohol (for example Exceval^{®}) as well as ethylene-vinyl alcohol copolymers (such as EVAL^{®}).

Also preferably, the photochromic substance has a low tendency to diffuse in the polyvinyl acetal of film A and/or the at least one UV absorber has a low tendency to diffuse in the polyvinyl acetal of film B.

UV absorbers that do not diffuse or that diffuse very little can be chosen from the following, in particular: polymeric UV absorbers, UV absorbers with ionic groups, UV absorbing nanoparticles, organic UV absorbers present as particles in the film matrix.

Preferably, film B comprises from 0.1 to 5.0 wt%, more preferably from 0.25 to 4.5 wt%, even more preferably from 0.5 to 4.0 wt%, even more preferably from 1.0 to 3.75 wt% and even more preferably from 2.0 to 3.5 wt% of UV absorber. If more than one UV absorber is present in film B, these values shall be read as the total amount of UV absorber.

Also preferably, the UV absorber is chosen from a benzotriazole-based compound, a benzophenone-based compound, a triazine-based compound, a benzoate-based compound, a malonic ester-based compound, or an oxalic anilide-based compound.

More preferably, the UV absorber is a benzotriazole-based UV absorber such as 2-(5-methyl-2-hydroxyphenyl)benzotriazole, 2-[2-hydroxy-3,5-bis(α,ω-dimethylbenzyl)phenyl]-2H-benzotriazole, 2-(3,5-di-t-butyl-2-hydroxyphenyl)benzotriazole, 2-(5-chloro-2-benzotriazolyl)-6-tert-butyl-p-cresol, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole, and 2-(2'-hydroxy-5'-t-octylphenyl)benzotriazole; or a hindered amine-based UV absorber such as 2,2,6,6-tetramethyl-4-piperidylbenzoate, bis(2,2,6,6-tetramethyl-4-piperidyl)sebacate, bis(1,2,2,6,6-pentamethyl-4-piperidyl)-2-(3,5-di-t-butyl-4-hydroxybenzyl)-2-n-butylmalonate, and 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethylpiperidine; or a benzoate-based UV absorber such as 2,4-di-t-butylphenyl-3,5-di-t-butyl-4-hydroxybenzoate, and hexadecyl-3,5-di-t-butyl-4-hydroxybenzoate.

Suitable examples of the triazine-based compound include 6-(4-hydroxy-3,5-di-t-butylanilino)-2,4-bis-octylthio-1,3, 5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, and 2-octylthio-4,6-bis-(3,5-di-t-butyl-4-oxyanilino)-1,3,5-triazine.

Suitable examples of the benzophenone-based compound include 2-hydroxy-4-methoxybenzophenone, 2,2'-dihydroxy-4-methoxybenzophenone, 2-hydroxy-4-methoxy-2-carboxybenzophenone, and 2-hydroxy-4-n-octoxybenzophenone.

Suitable examples of the malonic ester compound include dimethyl 2-(p-methoxybenzylidene) malonate, tetraethyl-2,2-(1,4-phenylenedimethylidene)bismalonate, and 2-(p-methoxybenzylidene)-bis(1,2,2,6,6-pentamethyl-4-piper idinyl)malonate.

Suitable examples of the oxalic anilide compound include oxalic diamides having an aryl group substituted on a nitrogen atom such as N-(2-ethylphenyl)-N'-(2-ethoxy-5-t-butylphenyl)oxalic diamide, N-(2-ethylphenyl)-N'-(2-ethoxy-phenyl)oxalic diamide, and 2-ethyl-2'-ethoxy-oxyanilide ("Sanduvor VSU" manufactured by Clariant, Inc.).

Also most preferably, the UV absorber has a hydroxyphenyl benzotriazole structural unit. Especially preferred is phenol, 2,2'-methylene-bis(6-(2H-benzotriazol-2-yl)-4-(1,1,3,3-tetramethylbutyl)), commercially available under the name Tinuvin^{®} 360 from BASF Schweiz AG.

Film A, B and C can be produced by any conventional method such as melt (co-)extrusion or solvent casting.

Preferably, the thickness of film B and/or film C is 250 - 2500 µm, more preferably 500 - 1000 µm, and most preferably 700 - 900 um.

The polyvinyl acetals used herein are generally produced by acetalization of polyvinyl alcohol or ethylene vinyl alcohol copolymer.

The films can contain polyvinyl acetals, each having a different polyvinyl alcohol content, degree of acetalization, residual acetate content, ethylene proportion, molecular weight and/or different chain lengths of the aldehyde of the acetal groups.

In particular, the aldehydes used for the production of the polyvinyl acetals can be linear or branched (that is to say of the "n" or "iso" type) containing 2 to 10 carbon atoms, which leads to corresponding linear or branched acetal groups. The polyvinyl acetals are referred to accordingly as "polyvinyl (iso)acetals" or "polyvinyl (n)acetals".

The polyvinyl (n)acetal used in accordance with the invention results in particular from the reaction of at least one polyvinyl alcohol with one or more aliphatic unbranched keto-compounds containing 2 to 10 carbon atoms. To this end, n-butyraldehyde is preferably used and the polyvinyl acetal is polyvinyl butyral (PVB).

The films preferably contain polyvinyl acetals having a proportion of polyvinyl acetate groups based on the layers, either identically or differently, of 0.1 to 20 mol %, preferably 0.5 to 3 mol %, or 5 to 8 mol %.

The polyvinyl alcohol content of the used polyvinyl acetals may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

The vinyl alcohol content and vinyl acetate content of the polyvinyl acetal were determined in accordance with DIN ISO 3681 (Acetate content) and DIN ISO 53240 (PVA content).

The films used in accordance with the invention contain at least 16 % by weight, such as 16.1 - 36.0 % by weight, preferably 22.0 - 32.0 % by weight and in particular 26.0 - 30.0 % by weight plasticiser.

Suitable plasticisers can be selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

In addition, the films may contain further additives, such as residual quantities of water, antioxidants, adhesion regulators, optical brighteners or fluorescent additives, stabilisers, colorants, processing aids, inorganic nanoparticles, pyrogenic silicic acid and/or surface active substances.

It is possible in accordance with the invention to first melt the film C with film A onto a glass sheet over the entire area or locally by increased temperature and to then cover this with the film B. Alternatively, the film C with film A and the film B can be positioned jointly between two glass sheets and molten at increased temperature.

The lamination step for producing a laminated glass is preferably carried out such that film C with its film A and film B are positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

Autoclave processes are carried out at an increased pressure from approximately 10 to 15 bar and temperatures from 100 to 145 °C over approximately 2 hours. Vacuum bag or vacuum ring methods, for example according to EP 1 235 683 B1, are being performed at approximately 200 mbar and 130 to 145 °C.

Vacuum laminators can also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

It is also possible for any or all films to have a wedge-shaped thickness profile for HUD applications.

In the simplest case, film B is a commercially available PVB film with or without ink ribbon and with or without a wedge-like thickness profile.

In a preferred embodiment of the present invention, the laminates are used in a way that film B is facing the side with the higher exposure to the UV light, e.g. film B is facing the outside of a vehicle or a building in case the laminate is used as a windshield or a building window, respectively.

In a second aspect, the present invention concerns a thermoplastic interlayer comprising
- at least one film A comprising a polymer and a photochromic substance which shows photocoloration when exposed to radiation at a wavelength of equal to or less than 400 nm and no photocoloration at a wavelength above 400 nm , and
- at least one film B comprising a polyvinyl acetal, at least one plasticiser and at least one UV absorber,
wherein film B has a light transmittance for light with a wavelength of equal to or less than 400 nm of 1% or less measured according to ISO 13837.

In a third aspect, the present invention concerns a thermoplastic interlayer comprising, in that order,
- a film C comprising a polyvinyl acetal and a plasticizer, wherein film C has a light transmittance for light with a wavelength of equal to or less than 400 nm of 100 or more measured according to ISO 13837,
- a film A comprising a polyvinyl alcohol (PVA) and a photochromic substance which shows photocoloration when exposed to radiation at a wavelength of equal to or less than 400 nm and no photocoloration at a wavelength above 400 nm, and
- a film B comprising a polyvinyl acetal, at least one plasticiser and at least one UV absorber, wherein film B has a light transmittance for light with a wavelength of equal to or less than 400 nm of 1% or less measured according to ISO 13837.

### EXAMPLES

A photochromic Film A is formed by casting a nano-emulsion, consisting of
a) 12 g of an aqueous polyvinyl alcohol (PVA) solution (8.75 wt-% Poval 10-98, commercially available from Kuraray Europe GmbH)
b) 0.11 mL of Myglyol^{®} 812 containing 1 mg Reversacol^{®} Palatinate Purple photochromic dye,
and subsequently evaporating the water. Thereby a solid PVA film, which contains nano-scaled droplets of the mixture of Myglyol^{®} 812 and Reversacol^{®} Palatinate Purple, was formed. The film was prepared in accordance with US10227527B, Example 8.

Following properties of Film A are measured:

| | |
|---|---|
| - Thickness: | 100 um |
| - Visible Light Transmittance clear [EN 410] | >80% |
| - Visible Light Transmittance tinted [EN 410 ] | <20% |
| - Haze-Level [ASTM D1003] | <2% |

Film A is used to prepare a glass laminate A with the following structure and order of layers:
**i.** 2 mm float glass (exterior side "S1")
**ii.** 0.76 mm PVB film (Trosifol^{®} UV Extra Protect commercially available from Kuraray Europe GmbH)
**iii.** 0.1 mm Film A as described above
**iv.** 0.76 mm PVB film (Trosifol^{®} Natural UV commercially available from Kuraray Europe GmbH)
**v.** 2 mm float glass (interior side "S4")

The PVB film layer ii. blocks more than 950 of electromagnetic radiation between 290 nm and 400 nm. The PVB film layer iv. transmits more than 700 of electromagnetic radiation between 360 nm and 400 nm.

Exposing the exterior side S1 of glass laminate A to natural sunlight or a radiation source, which emits radiation of 380 nm has no measurable impact on the visible light transmittance of the laminate.

Exposing the interior side S4 to sunlight or a radiation source, which emits radiation of wavelengths 380 nm causes the visible light transmittance to decrease to a value of <20%.

Furthermore, the durability of the photochromic glass laminate A is increased significantly due to the described laminate structure and orientation. When Glass laminate A is irradiated with a xenon lamp for 4500 hours on S1. A delta E (CIE-LAB) measurement shows a value of <1.5 for the clear state.

The same test was used for irradiating a glass laminate B with similar structure as glass laminate A. The only difference was that a standard PVB film was used for layer ii. This change in laminate structure lead to a high delta E of >5.5 for the clear state and an increase for the visible light transmittance to > 200.

## Claims

1. A laminated glass for use as a vehicle glazing or a building glazing comprising a first glass sheet and a second glass sheet laminated by means of at least one thermoplastic interlayer comprising
- at least one film A, oriented to the inside of the vehicle or the building, comprising a polymer and a photochromic substance which shows photocoloration when exposed to radiation at a wavelength of equal to or less than 400 nm and no photocoloration at a wavelength above 400 nm,
- at least one film B, oriented to the outside of the vehicle or the building, comprising a polyvinyl acetal, at least one plasticiser and at least one UV absorber, and
wherein film B has a light transmittance for light with a wavelength of equal to or less than 400 nm of 5% or less measured according to ISO 13837,
wherein a radiation source with a wavelength of equal to or less than 400 nm suitable to excite the photochromic substance in the at least one film A is located in such way to allow the excitation of the photochromic material.

2. The laminated glass according to claim 1 wherein the polymer in film A is polyamide, polyethylene terephthalate (PET), polybutylene terephthalate (PBT), polyethylen furanoate (PEF), polyethylene naphthalate (PEN), polyvinyl alcohol (PVA), polylactic acid (PLA), cellulose acetate, polymethyl methacrylates (PMMA), ionomers, or a combination thereof.

3. The laminated glass according to claim 2 wherein the polymer in film A comprises, consists of or essentially consists of polyvinyl alcohol.

4. The laminated glass according to claim 2 or 3 wherein the photochromic substance is introduced into film A in form of a nanoemulsion.

5. The laminated glass according to any one of claims 2 to 4 comprising a film C comprising a polyvinyl acetal and a plasticizer wherein film C is located between film A and one of the glass sheets and wherein film C has a light transmittance for light with a wavelength of equal to or less than 400 nm of 5% or more as measured according to ISO 13837.

6. The laminated glass according to claim 1 wherein film A comprises a polyvinyl acetal and a plasticizer.

7. The laminated glass according to claim 6 wherein the polyvinyl acetal is polyvinyl butyral.

8. The laminated glass according to claim 6 or 7 comprising a barrier film between film A and film B.

9. The laminated glass according to claim 8 wherein the barrier film comprises, consists of or essentially consists of polyethylene terephthalate (PET), polybutylene terephthalate (PBT), or polyvinyl alcohol (PVA).

10. The laminated glass according to any one of claims 7 to 9 wherein the photochromic substance has a low tendency to diffuse in the polyvinyl acetal of film A.

11. The laminated glass according to any one of claims 7 to 10 wherein the at least one UV absorber has a low tendency to diffuse in the polyvinyl acetal of film B.

12. The laminated glass according to any one of claims 1 to 11 wherein the polyvinyl acetal of film B is polyvinyl butyral.

13. The laminated glass according to any one of the claim 1 to 12 which is a windshield for a vehicle and which is equipped with a radiation source for light with a wavelength of equal to or less than 400 nm.

14. A thermoplastic interlayer comprising
- at least one film A comprising a polymer and a photochromic substance which shows photocoloration when exposed to radiation at a wavelength of equal to or less than 400 nm and no photocoloration at a wavelength above 400 nm , and
- at least one film B comprising a polyvinyl acetal, at least one plasticiser and at least one UV absorber,
wherein film B has a light transmittance for light with a wavelength of equal to or less than 400 nm of 5% or less measured according to ISO 13837.

15. A thermoplastic interlayer comprising, in that order,
- a film C comprising a polyvinyl acetal and a plasticizer, wherein film C has a light transmittance for light with a wavelength of equal to or less than 400 nm of 5% or more measured according to ISO 13837,
- a film A comprising a polyvinyl alcohol (PVA) and a photochromic substance which shows photocoloration when exposed to radiation at a wavelength of equal to or less than 400 nm and no photocoloration at a wavelength above 400 nm, and
- a film B comprising a polyvinyl acetal, at least one plasticizer and at least one UV absorber, wherein film B has a light transmittance for light with a wavelength of equal to or less than 400 nm of 5% or less measured according to ISO 13837.
